# EUROPÄISCHE PATENTANMELDUNG

(11) **EP 1 045 266 A2**
(43) Veröffentlichungstag der Anmeldung: **18.10.2000**
(21) Anmeldenummer: 00107671.0
(22) Anmeldetag: 10.04.2000
(51) Int. Cl.: G02B 6/38

(54) **Gerätesteckdose für Datenbearbeitungsgeräte mit Lichtwellenleiteraustritt**

(30) Priorität: 13.04.1999 DE 19916527
(71) Anmelder: Raczkowiak Kupferberg-Kabel GmbH, 51688 Wipperfürth-Kupferberg (DE)
(72) Erfinder: Raczkowiak, Achim, 51688 Wipperfürth (DE)
(74) Vertreter: Eggert, Hans-Gunther, Dr.

(57) **Zusammenfassung**

Die Erfindung bezieht sich auf eine Gerätesteckdose (1) nach der Norm IEC 320, Stand 1981, für Datenbe- oder -verarbeitungsgeräte, in die zusätzlich zu den stromführenden Leitungen (4,5,6) ein Lichtwellenleiter (2) zur Datenübertragung integriert ist. Dieser mündet zusammen mit den übrigen Leitungen (4,5,6) in ein Kabel (7), das am Netzstecker endet. Das andere Ende des Lichtwellenleiters (2), der sowohl seitlich aus der Gerätesteckdose (1) wie auch an ihrer Stirnseite austreten kann, wird an den Datenein- bzw. -ausgang des Datenbe- oder -verarbeitungsgerätes angeschlossen. Dadurch ist bei entsprechender Verkabelung der Wandsteckdosen die Installation separater Datenübertragungsleitungen überflüssig.

## Beschreibung

Die Erfindung betrifft eine *Gerätesteckdose nach der Norm IEC 320, Stand 1981,* im folgenden kurz *Gerätesteckdose* genannt, für Datenbe- oder -verarbeitungsgeräte.

Datenbe- oder -verarbeitungsgeräte, z.B. Personal Computer, aber auch Geräte der Kommunikations- und Medientechnik, medizinische Geräte, Heiz- und Klimageräte, werden mit einem Netzkabel, an dessen Enden sich in der Regel ein Netzstecker und eine Gerätesteckdose befinden, an das 230 V-Wechselstromnetz angeschlossen. Damit diese Geräte untereinander Daten austauschen können, müssen sie durch separate Datenübertragungsleitungen miteinander verbunden werden. Für eine solche Vernetzung werden meistens Kupferleitungen verwendet, seit einiger Zeit auch Lichtwellenleiter, z.B. aus Glas- oder Polymerfaser. Der Aufbau eines Netzwerkes ist, beispielsweise in großen Bürogebäuden, aufgrund der zusätzlichen Verkabelungen sehr aufwendig und im allgemeinen nur von ausgebildeten Fachleuten durchführbar.

Bisher gibt es bereits Wandsteckdosen (Schuko-Steckdosen), Netzstecker sowie Stromversorgungskabel mit integriertem Lichtwellenleiter. Der Anschluß eines solchen Netzsteckers an die entsprechende Wandsteckdose gewährleistet automatisch die Verbindung des Lichtwellenleiters mit einer entsprechenden in der Wand installierten Datenübertragungsleitung. Ein Nachteil ist allerdings, daß bislang sämtliche Leitungen, die durch das modifizierte Stromversorgungskabel verlaufen, d.h. Erde, Phase, Nulleiter und Lichtwellenleiter, von Fachpersonal in den einzelnen Datenbe- oder -verarbeitungsgeräten angeschlossen werden müssen. Somit ist das Kabel immer fest mit dem Gerät verbunden.

Der Erfindung liegt die Aufgabe zugrunde, die bei der Vernetzung von Datenbe- oder -verarbeitungsgeräten anfallende technische Installation, insbesondere den geräteseitigen Anschluß, zu vereinfachen, idealerweise dergestalt, daß z.B. auch nicht-geschulte Personen die Installation ausführen können.

Die Lösung der Aufgabe durch die Erfindung besteht darin, daß in einer Gerätesteckdose ein Lichtwellenleiter integriert ist, der mit dem Datenein- oder -ausgang des Datenbe- oder -verarbeitungsgerätes verbunden wird. Der Lichtwellenleiter verläuft parallel zu den stromführenden Leitungen durch ein Kabel, das im Netzstecker endet. Bei entsprechender Verkabelung der Wandsteckdosen mit Lichtwellenleitern ist eine Installation zusätzlicher Datenübertragungsleitungen somit überflüssig.

Erfindungsgemäß wird als Datenübertragungsleitung ein Lichtwellenleiter verwendet, der gegenüber einer herkömmlichen Leitung aus Metall den Vorteil hat, daß seine Länge nicht begrenzt ist und die Daten in einer größeren Menge und mit einer höheren Geschwindigkeit übertragen werden können. Bei Verwendung von Lichtwellenleitern können zudem durch ein um die stromführenden Leitungen ausgebildetes elektromagnetisches Feld oder einen Kurzschluß keine Störungen in der Datenübertragung auftreten.

Der Lichtwellenleiter kann seitlich oder, zusammen mit den stromführenden Leitungen, an der Stirnseite der Gerätesteckdose austreten. Ein seitlicher Austritt hat den Vorteil, daß der Datenein- bzw. -ausgang eines jeden handelsüblichen Datenbe- oder -verarbeitungsgerätes an den Lichtwellenleiter angeschlossen werden kann. Ein stirnseitiger Austritt bietet den Vorteil, daß automatisch durch den Anschluß des Stromversorgungskabels an das Gerät dieses mit dem Lichtwellenleiter, d.h. der Datenübertragungsleitung verbunden ist.

Im folgenden wird die Erfindung beispielhaft anhand von Zeichnungen verdeutlicht:
- Fig. 1: zeigt in teilweise transparenter Seitenansicht eine Gerätesteckdose (1) mit einem, durch einen Schnitt sichtbar gemachten, aus ihrer Stirnfläche austretenden Lichtwellenleiteranschluß (3),
- Fig. 2: zeigt die Stirnseite der in Fig. 1 dargestellten Gerätesteckdose,
- Fig. 3: zeigt die Unterseite der in Fig. 1 dargestellten Gerätesteckdose und den, durch einen Schnitt sichtbar gemachten, Lichtwellenleiteranschluß (3),
- Fig. 4: zeigt in teilweise transparenter Seitenansicht eine Gerätesteckdose (1) mit einem, durch einen Schnitt sichtbar gemachten, seitlich austretenden Lichtwellenleiteranschluß (3),
- Fig. 5: zeigt die Stirnseite der in Fig. 4 dargestellten Gerätesteckdose und den, durch einen Schnitt sichtbar gemachten, Lichtwellenleiteranschluß (3),
- Fig. 6: zeigt die Unterseite der in Fig. 4 dargestellten Gerätesteckdose.

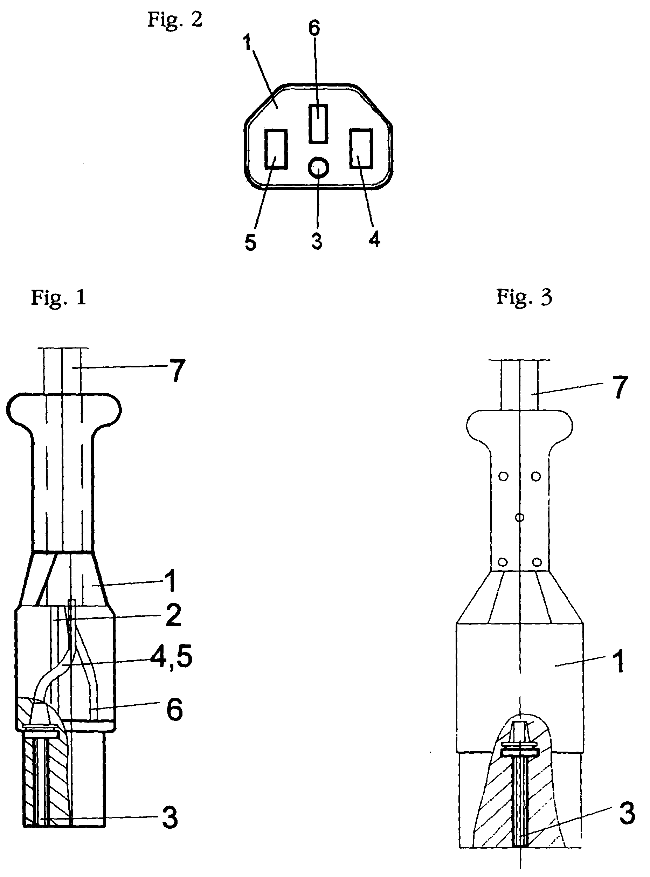

In Fig. 1 ist eine Gerätesteckdose (1) zu sehen, in der zusätzlich zu den in Netzkabeln üblichen Leitungen aus Metall, nämlich Phase (4), Nulleiter (5) und Erde (6), ein Lichtwellenleiter (2) integriert ist. Der Lichtwellenleiter (2) mündet zusammen mit den stromführenden Leitungen (4,5,6) in ein Kabel (7), das zum Netzstecker führt. Am anderen Ende der Gerätesteckdose (1) tritt ein Lichtwellenleiteranschluß (3) parallel zu den Metalleitungen (4,5,6) an der Stirnfläche aus. Die Gerätesteckdose (1) wird verbunden mit einem entsprechenden Gerätestecker am Gerätegehäuse. Durch den im Stromversorgungskabel integrierten Lichtwellenleiter (2) müssen für den Datenaustausch zwischen den Datenbe- oder -verarbeitungsgeräten keine separaten Datenübertragungskabel mehr verlegt werden, wie es üblicherweise der Fall ist.

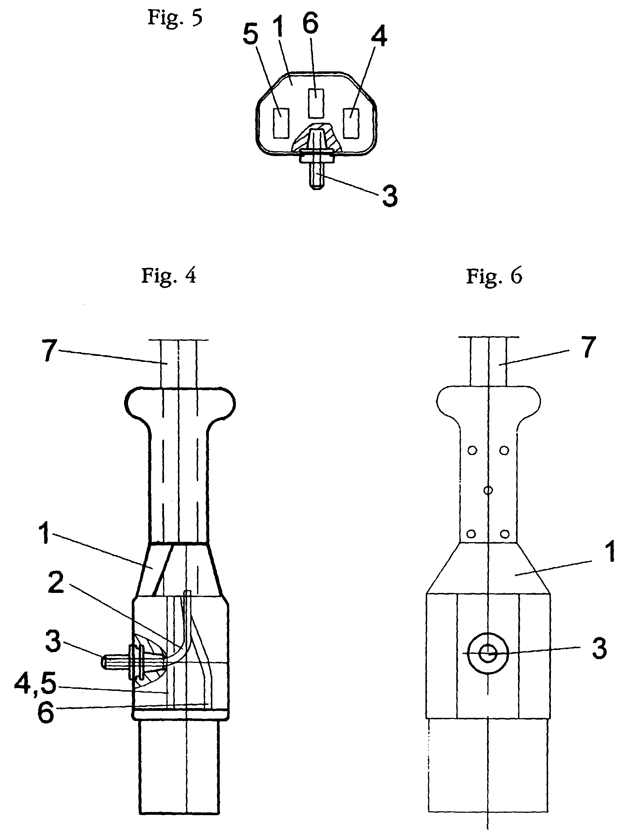

Da ein solcher Gerätestecker in einem handelsüblichen Standardgehäuse noch nicht vorhanden ist, wird in Fig. 4 eine Gerätesteckdose (1) gezeigt, die einen Lichtwellenleiteranschluß (3) aufweist, der im Unterschied zum vorgenannten Ausführungsbeispiel im Winkel von 90° zur Mittelachse aus der Unterseite der Gerätesteckdose (1) austritt. Auf diese Weise kann der übliche Datenausgang eines herkömmlichen Datenbe- oder -verarbeitungsgerätes genutzt werden, indem er mit dem Lichtwellenleiteranschluß (3) an der Gerätesteckdose (1) verbunden wird. Somit ist eine Umrüstung handelsüblicher Standardgeräte nicht notwendig.

### Bezugszeichenliste:

- 1: Gerätesteckdose
- 2: Lichtwellenleiter
- 3: Lichtwellenleiteranschluß
- 4: Phase
- 5: Nulleiter
- 6: Erde
- 7: Kabel

## Patentansprüche

1. Gerätesteckdose (1) nach der Norm IEC 320, Stand 1981, für die elektrische Stromversorgung von Datenbe- oder -verarbeitungsgeräten, dadurch gekennzeichnet, daß mindestens ein Lichtwellenleiter (2) in einem Teil der Gerätesteckdose (1) eingeschlossen oder mit ihr verbunden ist.

2. Gerätesteckdose nach Anspruch 1, dadurch gekennzeichnet, daß mindestens ein Lichtwellenleiter (2) einen Anschluß (3) für den Datenein- oder -ausgang eines Datenbe- oder -verarbeitungsgerätes aufweist.

3. Gerätesteckdose nach Anspruch 1, dadurch gekennzeichnet, daß die Gerätesteckdose (1) mit einem Kabel (7) verbunden ist.

4. Gerätesteckdose nach Anspruch 1, dadurch gekennzeichnet, daß mindestens ein Lichtwellenleiter (2) von der Gerätesteckdose (1) in ein Kabel (7) führt.

5. Gerätesteckdose nach Anspruch 3, dadurch gekennzeichnet, daß ein Lichtwellenleiter (2) durch das Kabel (7) verläuft oder mit dem Kabel (7) verbunden ist.

6. Gerätesteckdose nach einem der Ansprüche 3 bis 5, dadurch gekennzeichnet, daß das Kabel (7) mit einem Stecker verbunden ist.

7. Gerätesteckdose nach Anspruch 6, dadurch gekennzeichnet, daß ein Lichtwellenleiter (2) in dem Stecker eingeschlossen oder mit ihm verbunden ist.

8. Gerätesteckdose nach Anspruch 1, dadurch gekennzeichnet, daß diejenige Fläche, welche von den stromführenden Leitungen (4,5,6) durchdrungen ist, zusätzlich von mindestens einem Lichtwellenleiter (2) oder Lichtwellenleiteranschluß (3) durchdrungen ist.

9. Gerätesteckdose nach Anspruch 1, dadurch gekennzeichnet, daß mindestens eine Seite der Gerätesteckdose (1) von mindestens einem Lichtwellenleiter (2) oder Lichtwellenleiteranschluß (3) durchdrungen ist.
